# FASCICULE DE BREVET EUROPEEN

(11) **EP 3 388 346 B1**
(45) Date de publication et mention de la délivrance du brevet: **18.03.2020**
(21) Numéro de dépôt: 18164269.5
(22) Date de dépôt: 27.03.2018
(51) Int. Cl.: B64D 31/06, B64D 31/04, F02C 9/42

(54) **MODE DE FONCTIONNEMENT DÉGRADÉ D'UN GROUPE PROPULSEUR D'AÉRONEF PERMETTANT LE DÉPLAFONNEMENT D'UNE CONSIGNE DE POUSSÉE**
NOTBETRIEB EINER ANTRIEBSGRUPPE EINES LUFTFAHRZEUGS, DER EINE AUFHEBUNG DER HÖCHSTGRENZEN EINES SCHUBSOLLWERTS ERMÖGLICHT
DEGRADED OPERATION MODE OF AN AIRCRAFT POWER PLANT ALLOWING THE REMOVAL OF THE CEILING OF A THRUST SETPOINT

(30) Priorité: 29.03.2017 FR 1752622
(43) Date de publication de la demande: 17.10.2018
(73) Titulaire: Airbus Operations, 31060 Toulouse (FR)
(72) Inventeur: ZACCARIA, Patrick, 82170 Grisolles (FR); TRANCHARD, Sébastien, 31820 Pibrac (FR)
(74) Mandataire: Santarelli

(56) Documents cités:
- EP-A1- 2 624 239
- EP-A2- 2 724 939
- FR-A1- 2 977 068
- FR-A1- 3 035 641

## Description

La présente invention porte sur le domaine du contrôle des groupes propulseurs d'aéronef. Elle porte en particulier sur le contrôle de la poussée d'un groupe propulseur d'aéronef.

Les aéronefs, notamment les aéronefs commerciaux comportant plusieurs groupes propulseurs, sont généralement équipés de dispositifs permettant de surveiller le fonctionnement de leurs groupes propulseurs et d'en adapter le fonctionnement en cas d'anomalie ou de défaillance.

Chaque moteur, ou plus généralement chaque groupe propulseur, d'un aéronef est commandé par un contrôleur dédié. Le contrôleur génère et applique au groupe propulseur une consigne selon la poussée souhaitée. Ce contrôleur, souvent désigné par son acronyme anglophone EEC pour « Engine Electronic Contrôler » pouvant se traduire par « contrôleur électronique de moteur », est connecté à un ensemble de capteurs. Ces capteurs sont installés dans différentes zones et/ou sont en lien avec différentes fonctions du moteur afin d'en mesurer des paramètres de fonctionnement.

Le contrôleur d'un groupe propulseur d'aéronef a généralement également pour fonction de protéger le groupe propulseur en cas d'anomalie dans son fonctionnement ou de défaillance.

Le contrôleur est généralement configuré, tant d'un point de vue matériel qu'en termes de logiciel, pour mettre en œuvre des mesures de protection du groupe propulseur lorsque cela est nécessaire. Par exemple, si l'un (ou plusieurs) des paramètres de fonctionnement mesurés par le réseau de capteurs auquel est lié le contrôleur ou déterminés en fonction des mesures de ces capteurs sort d'une plage considérée normale lors du fonctionnement du moteur, le contrôleur peut mettre en œuvre des mesures de protection.

Un premier niveau de protection du groupe propulseur peut consister en le faire fonctionner dans un mode de fonctionnement dégradé. Par exemple, dans ce mode de fonctionnement dégradé la poussée générée par le groupe propulseur est limitée par rapport à la poussée maximale en fonctionnement nominal (c'est-à-dire en dehors des mesures de protection). Ainsi, en mode de fonctionnement dégradé, la consigne générée par le contrôleur est plafonnée de sorte que la poussée ne dépasse pas un certain seuil.

Un tel mode de fonctionnement dégradé présente néanmoins l'inconvénient d'empêcher l'obtention d'une poussée supérieure au seuil fixé, même en cas d'urgence, et même si l'application du mode de fonctionnement dégradé provient d'une mesure fausse ou d'une interprétation erronée du contrôleur. Bien évidemment, une commande permet au pilote de l'aéronef de désactiver manuellement le mode de fonctionnement dégradé. Néanmoins, une solution permettant de limiter au maximum sa charge mentale et toutes les actions annexes à sa tâche principale de pilotage en situation d'urgence serait souhaitable. FR2977068 et EP2624239 représentent des exemples de l'art antérieur.

La présente invention a pour but de résoudre tout ou partie des inconvénients précités.

L'invention porte ainsi sur un procédé de contrôle d'un groupe propulseur d'aéronef dans lequel la poussée générée par le groupe propulseur est régie par un contrôleur générant une consigne de poussée appliquée au groupe propulseur en fonction de la position d'une commande de poussée. Le contrôleur présente :
- un mode de fonctionnement nominal dans lequel la position de la commande de poussée détermine directement la consigne de poussée appliquée au groupe propulseur, et
- au moins un mode de fonctionnement dégradé, dans lequel la consigne de poussée est plafonnée de sorte que la poussée du groupe propulseur est limitée à un seuil prédéfini qui est inférieur à la poussée maximale dans le mode de fonctionnement nominal.

Dans le mode de fonctionnement dégradé, la réalisation d'une séquence prédéterminée de positions de la commande de poussée autorise la génération et l'application d'une consigne de poussée correspondant à une poussée supérieure audit seuil prédéfini.

En autorisant le contrôleur à générer une consigne de poussée déplafonnée par rapport à la consigne correspondant au seuil de poussée prédéfini pour le mode de fonctionnement dégradé par une séquence prédéterminée de la commande de poussée, l'invention permet au pilote de récupérer un surcroit de poussée de la part du moteur, au moins temporairement, par exemple en réponse à une situation d'urgence dans laquelle la protection absolue du moteur n'est plus la première priorité.

De préférence, la séquence prédéterminée est simple et intuitive, tout en traduisant avec certitude la volonté du pilote d'obtenir plus de poussée.

La séquence prédéterminée peut comporter la mise de la commande dans une position correspondant à la poussée souhaitée, la consigne de poussée alors générée correspondant à ladite poussée souhaitée.

Selon un mode de réalisation, la séquence prédéterminée comporte la mise de la commande de poussée dans une position prédéfinie de ralenti du groupe propulseur suivie de la mise de la commande dans une position correspondant à la poussée souhaitée.

Selon un autre mode de réalisation, la séquence prédéterminée comporte la mise de la commande de poussée dans une position correspondant à la poussée maximale.

Dans le mode de fonctionnement dégradé et subséquemment à la séquence prédéterminée de positions de la commande de poussée, la poussée peut être limitée à sa valeur courante de sorte que la consigne de poussée n'est pas augmentée si la commande de poussée est manœuvrée de nouveau dans une position correspondant à une poussée supérieure à ladite valeur courante.

Dans le mode de fonctionnement dégradé et subséquemment à la séquence prédéterminée de positions de la commande de poussée, la manœuvre de la commande de poussée dans une position correspondant à une poussée inférieure à la poussée courante peut entraîner la génération d'une consigne de poussée correspondant à la position de la commande.

Dans le mode de fonctionnement dégradé et subséquemment à la séquence prédéterminée de positions de la commande de poussée, le nombre de réalisations de la séquence prédéterminée est comptabilisé et toute manœuvre subséquente de la commande de poussée correspondant à une demande de poussée au-dessus du seuil est rendue inopérante si un nombre donné de réalisations de la séquence prédéterminée est dépassé.

Le nombre donné de réalisations de la séquence prédéterminée peut être par exemple un, deux, trois, ou quatre.

L'invention porte également sur un dispositif de contrôle de la poussée générée par un groupe propulseur d'aéronef comportant une commande de poussée dont la position correspond à une poussée souhaitée et un contrôleur adapté à générer une consigne de poussée et à la transmettre à un groupe propulseur, dans lequel le contrôleur est configuré de sorte à présenter : un mode de fonctionnement nominal et au moins un mode de fonctionnement dégradé, et dans lequel dans le mode de fonctionnement nominal, la position de la commande de poussée détermine directement une consigne de poussée générée par le contrôleur, et dans le mode de fonctionnement dégradé, la consigne de poussée est limitée à un seuil prédéfini qui est inférieur à la consigne correspondant à la poussée maximale dans le mode de fonctionnement nominal. Le contrôleur est en outre configuré de sorte que dans le mode de fonctionnement dégradé, une séquence prédéterminée de positions de la commande de poussée autorise la génération d'une consigne de poussée correspondant à une poussée supérieure audit seuil prédéfini.

L'invention porte enfin sur un aéronef comportant au moins un groupe propulseur et un tel dispositif de contrôle pour contrôler la poussée générée par ledit groupe propulseur.

D'autres particularités et avantages de l'invention apparaîtront encore dans la description ci-après.

Aux dessins annexés, donnés à titre d'exemples non limitatifs :
- la figure 1 représente en vue en perspective de manière schématique un aéronef comportant un dispositif conforme à un mode de réalisation de l'invention ;
- la figure 2 représente schématiquement les étapes d'un procédé mis en œuvre dans un mode de réalisation de l'invention.

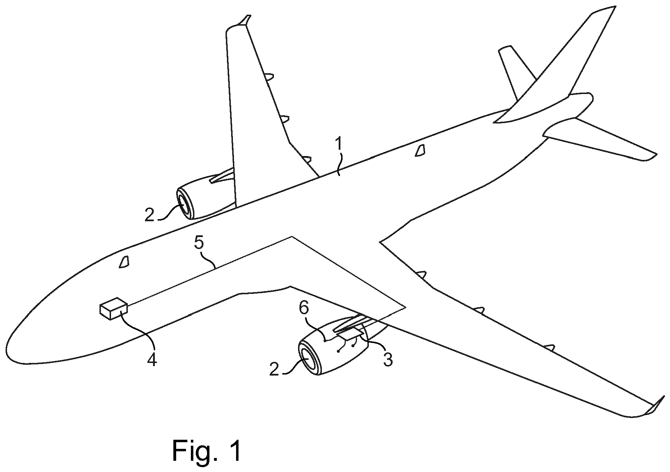

La figure 1 présente schématiquement un aéronef 1 comportant deux groupes propulseurs 2. L'invention est décrite ci-après en relation avec un groupe propulseur 2, mais elle s'applique bien évidemment avantageusement à chaque groupe propulseur 2 de l'aéronef concerné.

Le groupe propulseur 2 est équipé d'un contrôleur 3 qui régit ledit groupe propulseur 2. Ainsi, le contrôleur 3 est en charge de générer des signaux de commande à destination du groupe propulseur, afin d'en piloter le fonctionnement. Notamment, le contrôleur 3 émet une consigne de poussée, qui indique au groupe propulseur la poussée ou la puissance qu'il doit produire.

Dans un mode de fonctionnement nominal du contrôleur 3, qui est son mode de fonctionnement normal et généralement mis en œuvre par le contrôleur, la consigne de poussée est directement liée à la position d'une commande de poussée 4. La commande de poussée 4, également appelée « commande des gaz », comporte généralement une manette actionnable par le pilote de l'aéronef, et dont la position en rotation ou translation correspond à une valeur de puissance ou de poussée souhaitée pour le groupe propulseur 2 associé à cette commande de poussée 4. En d'autres termes, en mode de fonctionnement nominal du contrôleur 3, la position de la commande de poussée 4 correspond à une poussée souhaitée, cette position est transmise au contrôleur 3 par une liaison de commande 5, et le contrôleur 3 génère une consigne de poussée correspondant à la poussée souhaitée et la transmet au groupe propulseur 2, qui applique cette consigne et produit la poussée correspondante.

Le contrôleur 3 recueille également des informations issues de capteurs 6, pouvant être organisés en réseau. Les capteurs 6 permettent la mesure, ou la détermination, de paramètres de fonctionnement du groupe propulseur 2. Les paramètres de fonctionnement comprennent par exemple la température mesurée en un ou plusieurs points du groupe propulseur, la pression mesurée en un ou plusieurs points, la vitesse de rotation, le débit de carburant, la pression d'huile. De nombreux autres paramètres sont en outre généralement surveillés.

La surveillance et le suivi des paramètres permettent au contrôleur de déterminer une anomalie dans le fonctionnement du groupe propulseur 2, voire une défaillance du groupe propulseur 2. A cette fin, chaque paramètre peut être associé à une plage de valeurs dans laquelle il est considéré normal que ledit paramètre soit situé lors du fonctionnement du groupe propulseur. Lorsqu'un paramètre sort de la plage à laquelle il est associé, le contrôleur 3 peut, le cas échéant, conclure à une anomalie de fonctionnement du groupe propulseur 2.

Afin de préserver l'intégrité du groupe propulseur 2 ou plus généralement d'éviter la propagation d'une défaillance à plusieurs éléments du groupe propulseur 2 ou de l'aéronef 1, le contrôleur 3 peut ordonner la mise en œuvre de mesures de protections. Par exemple, deux niveaux de mesures de protections (ou modes de protection) peuvent être envisagés. Un mode de protection peut consister, dans les cas de figure les plus critiques, à commander l'arrêt complet du moteur. Dans des cas de moindre criticité, un mode de protection peut consister à faire fonctionner le contrôleur 3, et donc le groupe propulseur 2, selon un mode de fonctionnement dégradé. Par exemple, dans le mode de fonctionnement dégradé, la poussée maximale que peut fournir le groupe propulseur 2 peut être limitée à une fraction de la poussée maximale en mode nominal. Par exemple, la poussée en mode dégradée peut être limitée à une valeur comprise entre 40% et 90% de la poussée maximale en mode de fonctionnement nominal. Cette limitation est régie par le contrôleur 3, par exemple en plafonnant la consigne de poussée en mode dégradé (c'est-à-dire en interdisant la génération et la transmission d'une consigne correspondant à une poussée supérieure à un seuil prédéfini).

La poussée d'un autre ou des autres groupes propulseurs 2 de l'aéronef 1 peut le cas échéant être adaptée en réponse à cette limitation.

Néanmoins, certaines situations d'urgence peuvent nécessiter un surcroit de poussée, au moins temporaire, au-delà du seuil prédéfini pour le mode de fonctionnement dégradé.

Le pilote de l'aéronef 1 a pour cela généralement la possibilité de désactiver manuellement le mode dégradé. Mais cela nécessite une action supplémentaire ou peu intuitive de sa part, dans une situation potentiellement d'urgence.

En outre, en cas de déclenchement erroné du mode dégradé, le retour au mode nominal nécessite une réinitialisation du contrôleur, qui peut être trop longue pour répondre à une situation urgente.

Il est ainsi proposé dans l'invention, lorsque le contrôleur 3 est en mode de fonctionnement dégradé, de permettre malgré tout l'obtention d'une poussée supérieure au seuil prédéfini suite à la réalisation par le pilote d'une séquence prédéterminée de positions de la commande de poussée.

Pour un bénéfice maximum de l'invention, la séquence prédéterminée est avantageusement simple, intuitive, tout en traduisant de manière certaine la volonté du pilote d'obtenir une poussée supplémentaire malgré le fonctionnement en mode dégradé.

Par exemple, la séquence prédéterminée peut consister en une mise en position de la commande de poussée (commande des gaz) dans la position correspondant au ralenti du moteur (action à laquelle les pilotes sont habitués car le mode dégradé requiert généralement un retour de la commande des gaz à la position de ralenti), suivie d'une mise en position de la commande des gaz dans la position correspondant à la poussée souhaitée.

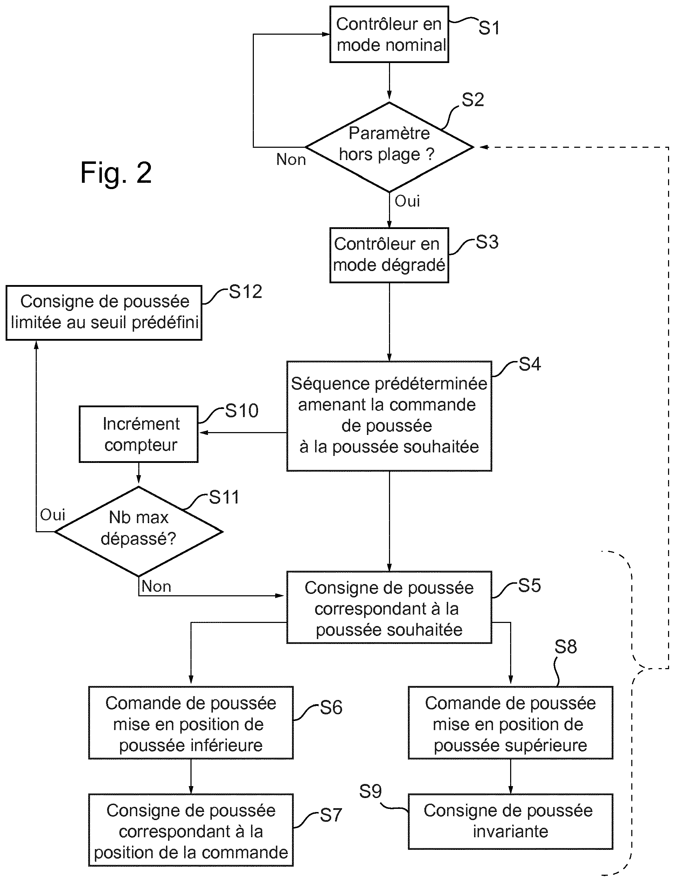

Un exemple de procédé employant cette séquence et pouvant être mis en œuvre dans l'invention est détaillé au regard de la figure 2.

Dans une première étape S1, un contrôleur d'un groupe propulseur d'aéronef fonctionne selon son mode de fonctionnement nominal. La consigne de poussée qu'il génère correspond à la poussée associée à la position courante de la commande de poussée.

Dans une étape S2, le contrôleur détermine, en fonction des signaux qu'il reçoit de capteurs et de manière continue, si un paramètre de fonctionnement du groupe propulseur sort de la plage considérée normale qui lui est associée. Tant qu'aucune anomalie n'est détectée, notamment tant qu'aucun paramètre de fonctionnement ne sort de la plage qui lui est affectée, le contrôleur reste dans son mode de fonctionnement nominal.

En cas d'anomalie, traduite dans l'exemple ici représenté par une sortie d'un (au moins) paramètre de fonctionnement de la plage qui lui est associé, le contrôleur passe en mode de fonctionnement dégradé dans une étape S3.

Si le pilote souhaite obtenir un surcroît de poussée malgré le passage en mode dégradé, il réalise une avec la commande de poussée une séquence prédéterminée, dont l'intentionnalité est certaine, et aboutissant à mettre la commande dans une position correspondant à la poussée souhaitée (étape S4).

La réalisation de la séquence prédéterminée traduit de manière certaine la volonté du pilote d'obtenir une poussée potentiellement supérieure au seuil de poussée prédéfini pour le mode dégradé. A titre d'exemples, la séquence prédéterminée peut comporter :
- la mise de la commande de poussée dans une position correspondant au régime de ralenti du groupe propulseur suivie de la mise de la commande de poussée dans une position correspondant à la poussée souhaitée ; ou
- la mise de la commande de poussée dans une position correspondant à la poussée maximale (dite « plein gaz »). Dans ce cas la poussée souhaitée est la poussée maximale, ou, si la commande de poussée est ramenée dans une autre position suite au passage plein gaz, la poussée correspondant à cette autre position.

D'autres séquences prédéfinies traduisant de manière sûre la volonté du pilote sont envisageables.

Le contrôleur génère une consigne de poussée correspondant à la poussée souhaitée et l'applique dans une étape S5 au groupe propulseur, qui produit ainsi la poussée souhaitée malgré que le contrôleur soit toujours en mode de fonctionnement dégradé.

Dans l'exemple ici représenté à titre d'exemple, on considère ensuite la position appliquée ensuite à la commande de poussée.

Selon un premier cas de figure, la commande de poussée est mise dans une position correspondant à une poussée inférieure à la poussée courante (étape S6). Dans ce cas, la poussée est réduite en correspondance par génération et application d'une consigne de poussée correspondante (étape S7).

Selon un deuxième cas de figure, la commande de poussée est mise dans une position correspondant à une poussée supérieure à la poussée courante (étape S8). Le contrôleur fonctionnant toujours selon le mode dégradé, ce nouveau mouvement de la commande de poussée ne se traduit pas par une augmentation de la consigne de poussée et corolairement de la poussée. La poussée reste donc invariante (étape S9).

Le troisième cas de figure correspond à une nouvelle exécution de la séquence prédéterminée (retour à l'étape S4).

Néanmoins, il peut être prévu dans le procédé mis en œuvre (tel que dans le procédé ici représenté à titre d'exemple) de limiter la possibilité d'obtenir un surcroît de poussée au-delà du seuil prédéfini à une seule occurrence, ou à un nombre donné d'occurrences. Pour cela, chaque fois que la séquence prédéterminée de la commande de poussée est réalisée lorsque le contrôleur est en mode dégradé, un compteur est incrémenté (S10). Dans une étape S11, le contrôleur évalue si le nombre donné d'occurrences (par exemple un) est dépassé. Si le nombre donné est dépassé, alors le contrôleur applique le mode dégradé sans exception (étape S12), c'est-à-dire que la consigne de poussée est plafonnée de sorte que la poussée est limitée au seuil prédéfini pour le mode dégradé, et même si la commande de poussée mise dans une position correspondant à une poussée supérieure. Si le nombre donné n'est pas dépassé, alors le contrôleur autorise à l'étape S5 la génération d'une consigne de poussée correspondant à la poussée souhaitée correspondant à la position de la commande de poussée.

Bien évidemment, tout au long de ce procédé le contrôleur peut vérifier si un retour au fonctionnement selon le mode nominal peut être réalisé. Il s'agit d'une part de s'assurer que les paramètres de fonctionnement du groupe propulseur sont de nouveau dans leur plage respective admissible, mais également de s'assurer que la réinitialisation du contrôleur peut être réalisée de manière sûre.

En outre, à tout moment le contrôleur peut évaluer si, notamment du fait du surcroit de poussée requis, un retour au mode dégradé sans autorisation de surcroit de poussée voire l'application d'une autre mesure de protection (comme l'arrêt du groupe propulseur) doit être ordonné.

L'invention propose ainsi un procédé et un dispositif de contrôle d'un groupe propulseur d'aéronef qui palie aux inconvénients de l'application d'un mode de protection dans lequel la poussée maximale est réduite (c'est-à-dire un mode de fonctionnement dégradé), notamment lorsqu'une situation d'urgence se produit ou que le passage en mode de protection est dû à une analyse erronée des paramètres de fonctionnement du groupe propulseur. Bien que le procédé ait été décrit pour une séquence de positions de la commande de poussée consistant à ramener la commande de poussée au ralenti puis à la mettre dans la position correspondant à la poussée souhaitée ou une mise de la commande en position de poussée maximale (« plein gaz »), d'autres séquences simples peuvent être envisagées sans sortir du cadre de l'invention, par exemple en substituant dans la séquence le passage par la position de ralenti par un passage en position de poussée maximale (« plein gaz »), ou par une succession de positions relatives à la position courante de la commande de poussée au moment du passage en mode dégradé (par exemple une réduction des gaz suivi d'une augmentation des gaz vers la position correspondant à la poussée souhaitée).

## Revendications

1. Procédé de contrôle d'un groupe propulseur (2) d'aéronef dans lequel la poussée générée par le groupe propulseur (2) est régie par un contrôleur (3) générant une consigne de poussée appliquée au groupe propulseur (2) en fonction de la position d'une commande de poussée (4), ledit contrôleur (3) présentant :
- un mode de fonctionnement nominal dans lequel la position de la commande de poussée (4) détermine directement la consigne de poussée appliquée au groupe propulseur (2), et
- au moins un mode de fonctionnement dégradé, dans lequel la consigne de poussée est plafonnée de sorte que la poussée du groupe propulseur (2) est limitée à un seuil prédéfini qui est inférieur à la poussée maximale dans le mode de fonctionnement nominal,
**caractérisé en ce que**, dans le mode de fonctionnement dégradé, la réalisation d'une séquence prédéterminée de positions de la commande de poussée (4) autorise la génération et l'application d'une consigne de poussée correspondant à une poussée supérieure audit seuil prédéfini.

2. Procédé selon la revendication 1, dans lequel la séquence prédéterminée comporte la mise de la commande dans une position correspondant à la poussée souhaitée, la consigne de poussée alors générée (S5) correspondant à ladite poussée souhaitée.

3. Procédé selon la revendication 2, dans lequel la séquence prédéterminée comporte la mise de la commande de poussée dans une position prédéfinie de ralenti du groupe propulseur suivie de la mise de la commande dans une position correspondant à la poussée souhaitée.

4. Procédé selon la revendication 2, dans lequel la séquence prédéterminée comporte la mise de la commande de poussée dans une position correspondant à la poussée maximale.

5. Procédé selon l'une des revendications précédentes dans lequel, dans le mode de fonctionnement dégradé et subséquemment à la séquence prédéterminée de positions de la commande de poussée, la poussée est limitée à sa valeur courante de sorte que la consigne de poussée n'est pas augmentée si la commande de poussée est manœuvrée de nouveau dans une position correspondant à une poussée supérieure à ladite valeur courante (S8).

6. Procédé selon l'une des revendications précédentes, dans lequel, dans le mode de fonctionnement dégradé et subséquemment à la séquence prédéterminée de positions de la commande de poussée, la manœuvre de la commande de poussée dans une position correspondant à une poussée inférieure à la poussée courante (S6) entraine la génération d'une consigne de poussée correspondant à la position de la commande (S7).

7. Procédé selon l'une des revendications précédentes dans lequel, dans le mode de fonctionnement dégradé et subséquemment à la séquence prédéterminée de positions de la commande de poussée, le nombre de réalisations de la séquence prédéterminée est comptabilisé (S10) et toute manœuvre subséquente de la commande de poussée correspondant à une demande de poussée au-dessus du seuil est rendue inopérante si un nombre donné de réalisations de la séquence prédéterminée est dépassé.

8. Procédé selon la revendication 7, dans lequel le nombre donné de réalisations de la séquence prédéterminée est un, deux, trois, ou quatre.

9. Dispositif de contrôle de la poussée générée par un groupe propulseur d'aéronef comportant :
- une commande de poussée (4) dont la position correspond à une poussée souhaitée ; et
- un contrôleur (3) adapté à générer une consigne de poussée et à la transmettre à un groupe propulseur ;
dans lequel le contrôleur (3) est configuré de sorte à présenter : un mode de fonctionnement nominal et au moins un mode de fonctionnement dégradé,
et dans lequel :
- dans le mode de fonctionnement nominal, la position de la commande de poussée (4) détermine directement une consigne de poussée générée par le contrôleur (3), et
- dans le mode de fonctionnement dégradé, la consigne de poussée est limitée à un seuil prédéfini qui est inférieur à la consigne correspondant à la poussée maximale dans le mode de fonctionnement nominal,
**caractérisé en ce que** le contrôleur (3) est en outre configuré de sorte que dans le mode de fonctionnement dégradé, une séquence prédéterminée de positions de la commande de poussée (4) autorise la génération d'une consigne de poussée correspondant à une poussée supérieure audit seuil prédéfini.

10. Aéronef (1) comportant au moins un groupe propulseur (2) et un dispositif de contrôle selon la revendication 9 pour contrôler la poussée générée par ledit groupe propulseur (2).

## Patentansprüche

1. Verfahren zur Überwachung eines Triebwerks (2) eines Luftfahrzeugs, bei dem der vom Triebwerk (2) erzeugte Schub von einer Steuereinheit (3) geregelt wird, die abhängig von der Stellung einer Schubsteuerung (4) einen an das Triebwerk (2) angewendeten Schubsollwert erzeugt, wobei die Steuereinheit (3) aufweist:
- eine Nennbetriebsart, in der die Stellung der Schubsteuerung (4) den an das Triebwerk (2) angewendeten Schubsollwert direkt bestimmt, und
- mindestens eine Notlaufbetriebsart, in der die Obergrenze des Schubsollwerts so festgesetzt wird, dass der Schub des Triebwerks (2) auf eine vordefinierte Schwelle begrenzt ist, die niedriger ist als der maximale Schub in der Nennbetriebsart,
**dadurch gekennzeichnet, dass** in der Notlaufbetriebsart die Durchführung einer vorbestimmten Folge von Stellungen der Schubsteuerung (4) die Erzeugung und Anwendung eines Schubsollwerts erlaubt, der einem höheren Schub als die vordefinierte Schwelle entspricht.

2. Verfahren nach Anspruch 1, wobei die vorbestimmte Folge die Anordnung der Steuerung in einer Stellung aufweist, die dem gewünschten Schub entspricht, wobei der dann erzeugte Schubsollwert (S5) dem gewünschten Schub entspricht.

3. Verfahren nach Anspruch 2, wobei die vorbestimmte Folge das Anordnen der Schubsteuerung in einer vordefinierten Leerlaufstellung des Triebwerks gefolgt vom Anordnen der Steuerung in einer Stellung entsprechend dem gewünschten Schub aufweist.

4. Verfahren nach Anspruch 2, wobei die vorbestimmte Folge das Anordnen der Schubsteuerung in einer Stellung entsprechend dem maximalen Schub aufweist.

5. Verfahren nach einem der vorhergehenden Ansprüche, wobei in der Notlaufbetriebsart und nach der vorbestimmten Folge von Stellungen der Schubsteuerung der Schub auf seinen laufenden Wert begrenzt wird, so dass der Schubsollwert nicht erhöht wird, wenn die Schubsteuerung erneut in eine Stellung gebracht wird, die einem höheren Schub als der laufende Wert (S8) entspricht.

6. Verfahren nach einem der vorhergehenden Ansprüche, wobei in der Notlaufbetriebsart und nach der vorbestimmten Folge von Stellungen der Schubsteuerung die Betätigung der Schubsteuerung in eine Stellung entsprechend einem geringeren Schub als der laufende Schub (S6) die Erzeugung eines Schubsollwerts bewirkt, der der Stellung der Steuerung (S7) entspricht.

7. Verfahren nach einem der vorhergehenden Ansprüche, wobei in der Notlaufbetriebsart und nach der vorbestimmten Folge von Stellungen der Schubsteuerung die Anzahl von Durchführungen der vorbestimmten Folge erfasst wird (S10), und jede nachfolgende Betätigung der Schubsteuerung entsprechend einer Schubanforderung oberhalb der Schwelle unwirksam gemacht wird, wenn eine gegebene Anzahl von Durchführungen der vorbestimmten Folge überschritten wurde.

8. Verfahren nach Anspruch 7, wobei die gegebene Anzahl von Durchführungen der vorbestimmten Folge eins, zwei, drei oder vier ist.

9. Vorrichtung zur Überwachung des von einem Triebwerk eines Luftfahrzeugs erzeugten Schubs, die aufweist:
- eine Schubsteuerung (4), deren Stellung einem gewünschten Schub entspricht; und
- eine Steuereinheit (3), die geeignet ist, einen Schubsollwert zu erzeugen und an ein Triebwerk zu übertragen;
wobei die Steuereinheit (3) konfiguriert ist, um aufzuweisen: eine Nennbetriebsart und mindestens eine Notlaufbetriebsart,
und wobei:
- in der Nennbetriebsart die Stellung der Schubsteuerung (4) direkt einen von der Steuereinheit (3) erzeugten Schubsollwert bestimmt, und
- in der Notlaufbetriebsart der Schubsollwert auf eine vordefinierte Schwelle begrenzt ist, die niedriger als der dem maximalen Schub in der Nennbetriebsart entsprechende Sollwert ist,
**dadurch gekennzeichnet, dass** die Steuereinheit (3) außerdem so konfiguriert ist, dass in der Notlaufbetriebsart eine vorbestimmte Folge von Stellungen der Schubsteuerung (4) die Erzeugung eines Schubsollwerts erlaubt, der einem höheren Schub als die vordefinierte Schwelle entspricht.

10. Luftfahrzeug (1), das mindestens ein Triebwerk (2) und eine Überwachungsvorrichtung nach Anspruch 9 aufweist, um den vom Triebwerk (2) erzeugten Schub zu überwachen.

## Claims

1. Method of controlling an aircraft propulsion assembly (2) in which the thrust generated by the propulsion assembly (2) is governed by a controller (3) generating a thrust setting applied to the propulsion assembly (2) according to the position of a thrust control (4), said controller (3) having:
- a nominal operating mode in which the position of the thrust control (4) directly determines the thrust setting applied to the propulsion assembly (2), and
- at least one degraded operating mode, in which the thrust setting is capped such that the thrust from the propulsion assembly (2) is limited to a predefined threshold which is lower than the maximum thrust in the nominal operating mode,
**characterised in that**, in the degraded operating mode, the performance of a predetermined sequence of positions of the thrust control (4) authorises the generation and the application of a thrust setting corresponding to a higher thrust than said predefined threshold.

2. Method according to claim 1, in which the predetermined sequence comprises the setting of the control in a position corresponding to the desired thrust, the thrust setting then generated (S5) corresponding to said desired thrust.

3. Method according to claim 2, in which the predetermined sequence comprises the setting of the thrust control into a predefined position of idling of the propulsion assembly followed by the setting of the control into a position corresponding to the desired thrust.

4. Method according to claim 2, in which the predetermined sequence comprises the setting of the thrust control into a position corresponding to the maximum thrust.

5. Method according to one of the preceding claims, in which, in the degraded operating mode and subsequent to the predetermined sequence of positions of the thrust control, the thrust is limited to its current value such that the thrust setting is not increased if the thrust control is manoeuvred again into a position corresponding to a higher thrust than said current value (S8) .

6. Method according to one of the preceding claims, in which, in the degraded operating mode and subsequent to the predetermined sequence of positions of the thrust control, the manoeuvring of the thrust control into a position corresponding to a lower thrust than the current thrust (S6) leads to the generation of a thrust setting corresponding to the position of the control (S7) .

7. Method according to one of the preceding claims, in which, in the degraded operating mode and subsequent to the predetermined sequence of positions of the thrust control, the number of performances of the predetermined sequence is counted (S10) and any subsequent manoeuvre of the thrust control corresponding to a thrust request above the threshold is rendered inoperative if a given number of performances of the predetermined sequence is exceeded.

8. Method according to claim 7, in which the given number of performances of the predetermined sequence is one, two, three or four.

9. Device for controlling the thrust generated by an aircraft propulsion assembly comprising:
- a thrust control (4) whose position corresponds to a desired thrust; and
- a controller (3) suitable for generating a thrust setting and for transmitting it to a propulsion assembly;
in which the controller (3) is configured to have: a nominal operating mode and at least one degraded operating mode,
and in which:
- in the nominal operating mode, the position of the thrust control (4) directly determines a thrust setting generated by the controller (3), and
- in the degraded operating mode, the thrust setting is limited to a predefined threshold which is lower than the setting corresponding to the maximum thrust in the nominal operating mode,
**characterised in that** the controller (3) is also configured such that, in the degraded operating mode, a predetermined sequence of positions of the thrust control (4) authorises the generation of a thrust setting corresponding to a higher thrust than said predefined threshold.

10. Aircraft (1) comprising at least one propulsion assembly (2) and a control device according to claim 9 for controlling the thrust generated by said propulsion assembly (2).
